# EUROPEAN PATENT APPLICATION

(11) **EP 1 450 518 A1**
(43) Date of publication of application: **25.08.2004**
(21) Application number: 03290439.3
(22) Date of filing: 24.02.2003
(51) Int. Cl.: H04L 12/56

(54) **Mirroring queue daemon**

(71) Applicant: Sema S.A., 92120 Montrouge (FR)
(72) Inventor: Belgiorno, Vincenzo, Schlumberger Systèmes, 92120 Montrougo (FR); Ruotolo, Michele, Schlumberger Systèmes, 92120 Montrougo (FR)
(74) Representative: Gabriel, Franck

(57) **Abstract**

A method for real-time replication of a flow of data being exchanged between a producer and a consumer comprises a succession of steps. A message is produced from the data flow coming from the producer and en-queued on a producer queue. The message is replicated on a first and on a second service queue. The message is pulled of the first service queue to a first transmitter means, and of the second service queue to a second transmitter means. The message of the first service queue is transferred via the first transmitter means to a first receiver means through a first connection means. The message of the second service queue is transferred via the second transmitter means to a second receiver means through a second connection means.
- en-queuing the message of the first receiver means to a consumer queue,
- de-queuing the message from the consumer queue to the consumer,
In case of a failure of the first transmitter or the first receiver or the first connection means, the message of the second receiver means is en-queued to the consumer queue of the consumer.

The method is implemented through a specific software working in the background called a daemon.

## Description

### Field of the invention

The invention relates to backup methods and systems and more specifically to a method and a system for real-time replication of a flow of data being exchanged between a producer and a consumer.

### Background of the invention

The real-time replication of a flow of data find a particular application in the telecommunication network domain, especially in modern intelligent network. Intelligent network offers an architecture that provides flexibility for facilitating the introduction of new capabilities and services in particular by telecommunication networks operators (Telecom Operators). Such networks linking numerous components, applications, databases for performing specific functionality involve the exchange of a tremendous amount of valuable data. The loss of particular data, for example data related to rating and billing the consumption of particular services by subscriber, could be highly prejudicial to Telecom Operators.

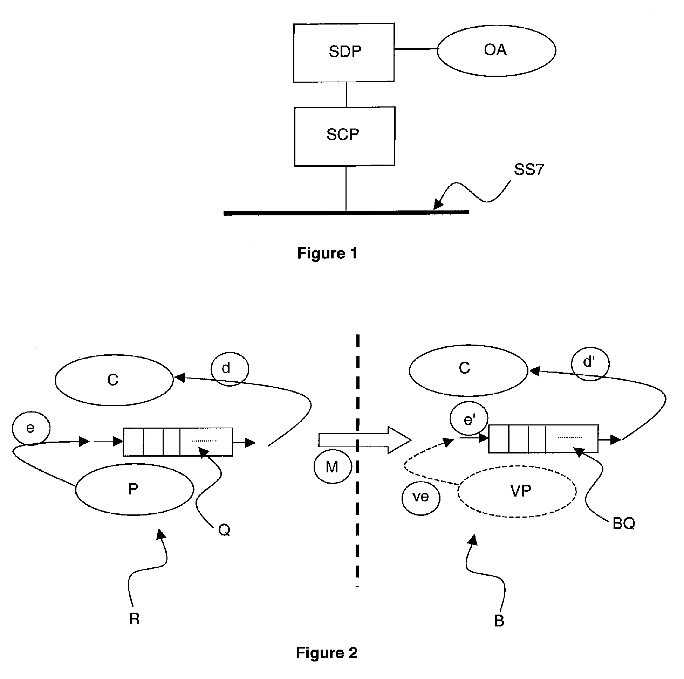

Figure 1 shows a specific part of an intelligent network, comprising a network SS7, a service control point SCP, a service data point SDP and telecom operator applications OA. The service control point SCP is a physical entity, e.g. a server, that implements a service control function. The service control point is linked to the network SS7 and to the service data point SDP. The service data point is a physical entity, e.g. a server, that implements a service data function and interacts with the Telecom Operator applications (billing application, subscriber's prepaid account management application...).

In view of the value of data being exchanged between a producer (for example a server like the SCP) and a consumer (for example a client server like the SDP), there is a need to reduce the amount of data lost from a server when a crash down occurs and/or to provide restoration mechanism of lost data.

It is known to have a data replication based on a cluster system. For example, the platform TRU 64 commercialized by Compaq proposes a data replication mechanism via a running cluster. On this platform, a redundant channel replicates memory areas, without knowing when the data are readable. Such a solution is slow and not adapted to real-time treatment of data. Such a data replication mechanism also suffers from the problem of the unpredictable latency, which means that it is impossible to know when the data is in a consistent status on the consumer part.

### Obiect and summary of the invention

Therefore it is an object of the present invention to provide a method and system that overcomes the at least one shortcoming of the prior art system.

According to the invention, the method for real-time replication of a flow of data being exchanged between a producer and a consumer, comprises the steps of :
- producing a message from the data flow coming from the producer,
- en-queuing the message on a producer queue,
- replicating the message on a first and on a second service queue,
- pulling the message of the first service queue to a first transmitter means, and the message of the second service queue to a second transmitter means,
- transferring the message of the first service queue via the first transmitter means to a first receiver means through a first connection means,
- transferring the message of the second service queue via the second transmitter means to a second receiver means through a second connection means,
- en-queuing the message of the first receiver means to a consumer queue,
wherein in case of a failure of the first transmitter or the first receiver or the first connection means, the message of the second receiver means is en-queued to the consumer queue, before being de-queued to the consumer.

It is also proposed a system for real-time replication of a flow of data being exchanged between a producer and a consumer. The system comprises :
- a producer queue,
- a first and a second service queue,
- a first transmitter means and a first receiver means, said first transmitter and receiver means being connected together via a first connection means,
- a second transmitter means and a second receiver means, said second transmitter and receiver means being connected together via a second connection means,
- a consumer queue, and
- a log means.

The present invention is based on a double socket (a socket being a common transmission on TCP/IP (Transmission Control Protocol/Internet Protocol), and represents the channel obtained after a connection) independent transmission system between the producer, namely a server application, and the consumer, namely a client application. The system comprises a selective sink queue on consumer side (sink queue being a memory area in which data are stored and forgotten). This system maintains a double transmission of the data flow in a continuous manner through a mirroring structure. Also, the mirrored structure is directly used by the client application. Therefore, in case of the occurrence of a crash down of the first transmission means, the other transmission means is still transmitting. Consequently, no time is needed for maintenance operation or data recovery.

Other characteristics and advantages of the invention will be described in more detailed in the following description of the invention and in one practical example of application.

### Brief description of the drawings

The following detailed description, given by way of example, will be best understood with the accompanying drawings in which :
- Figure 1 represents a known chain of components in an intelligent network ;
- Figure 2 represents schematically the principle of mirroring mechanism of the invention ;
- Figure 3.A and 3.B represent schematically the system of the invention for real-time replication of a flow of data being exchanged between a producer and a consumer and also the different steps of the associated method.

### Detailed description of the invention

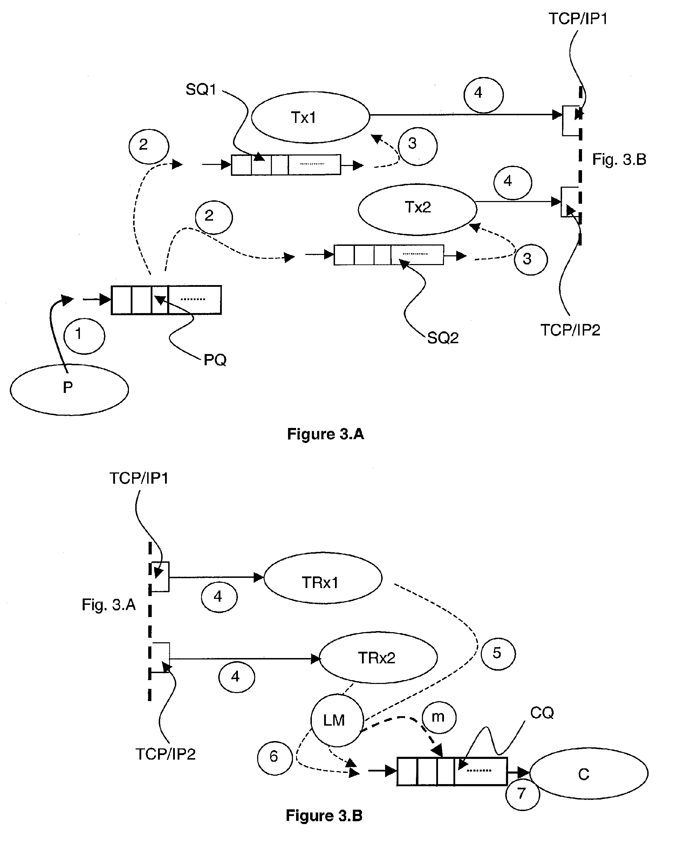

Figure 2 illustrates schematically the general data replication principle of a mirroring queue daemon of the invention. It is commonly known that a daemon refers to a specific type of program or agent (computer program code means) designed to work in the background, or to perform hidden operation. Using a daemon, a program can simply hand off data to the daemon and go on to more important tasks. In the frame of the present invention, the daemon may be seen as a normal inter-thread queue in the running server. It is located between a producer P and a consumer C.

On Figure 2, the dashed vertical line separate the running side R from the backup side B of the server. On the running side of the server R, the message coming from the producer P is en-queued to a queue Q (step e). Then the message is de-queued (step d) to a consumer C. On the backup side of the server B, the message of the queue Q is replicated on a backup queue BQ (step M and e'). Then the message is de-queued (step d') to the consumer C. Thus, the mirroring system can be seen as a virtual producer VP (dashed lined circled) which virtually en-queued (step ve) the message to the backup queue BQ.

In case of any failure arising during any steps, in particular step d which is the most sensitive regarding failure occurrence, on the running side R of the server, the consumer C can always de-queued the backup data. Consequently, the probability of losing data is non-existent, at least quite low.

Figures 3.A and 3.B illustrate in a detailed way, the process of real-time replication of a flow of data shown on Figure 2.

A producer P generates a flow of data, a part of which forming a message. During a first step, this message is en-queued (step 1) on a producer queue PQ. During a second step, the message is replicated (step 2) on first service queue SQ1 and on a second service queue SQ2. During a third step, dedicated transmitter means pull the message (step 3) from the service queues. In particular, a first transmitter means Tx1 pulls the message from the first service queue SQ1, and a second transmitter means Tx2 pulls the message from the second service queue SQ2. During a fourth step, the message is transferred (step 4) from the first transmitter means Tx1 to a first receiver means TRx1, and from the second transmitter means Tx2 to a second receiver means TRx2. The first transmitter means Tx1 is linked to the first receiver means TRx1 by a first connection means TCP/IP1. The second transmitter means Tx2 is linked to a second receiver means TRx2 by a second connection means TCP/IP2. During a fifth step, the message is en-queued (step 5) by the first receiver means TRx1 to a consumer queue CQ. Finally, the message is de-queued (step 7) from the consumer queue CQ to the consumer C.

The connection means TCP/IP1, TCP/IP2 are for example a Transmission Control Protocol / Internet Protocol type connection. However, others types of connection are suitable.

A log means LM monitors (schematically represented by dashed arrow m - Fig. 3.B) the consumer queue CQ. Advantageously, both receivers are configured to execute the en-queue operations (step 5 and 6). The log means LM function is to filter the message en-queued (step 6) by the second receiver means TRx2 to the consumer queue CQ, in order to avoid duplication of the message coming from the first and the second receiver means to be en-queued to the consumer queue CQ.

There are different components which can be subject to failure. Such components are, for example, the first transmitter Tx1, or the first receiver TRx1, or the first connection means TCP/IP1. In case of a failure, then obviously not any message will be en-queued to the consumer queue CQ. Thus, the log means LM will allow the message of the second receiver means TRx2 to be en-queued (step 6) to the consumer queue CQ. Then, the message is de-queued (step 7) from the consumer queue CQ to the consumer C.

In the previous example, a failure of the first transmitter Tx1, or the first receiver TRx1, or the first connection means TCP/IP1 was considered. However, it is possible that a failure occurred with the second transmitter Tx2, or the second receiver TRx2, or the first connection means TCP/IP2. Thus, it is advantageous to design a system in which one of the messages coming from either the first receiver TRx1 or the second receiver TRx2 is en-queued to the consumer queue CQ. Preferably, the first message in time order is en-queued, while the other message is filtered by the log system. Consequently, if a failure occurs on one component, no supervision operation is needed to swap transmission from one transmitter to the other, because the other transmitter is always active and performs normally the en-queue operation. Indeed, it is impossible, at least highly improbable that two components of the two lines fails at the same time.

The log means LM makes sure that there is a mutual exclusion of the message flow coming from the two receiver. As only one of the receivers must manage to en-queue a given message, the log means controls that if a message is already in the queue, the same message coming from the other receiver is not put in the queue. For avoiding to write twice the same message, the log means controls a hidden trace left by every message present in the queue. If the log means recognizes that a second en-queue operation has the same trace than one previously left, the message is considered as "already en-queued" and is filtered out.

This method is advantageous because it requires not any external supervision system and because there is an automatic mutual exclusion of the messages. Consequently, there is no waiting time to virtually switch from one connection to the other in case of failure.

Advantageously, the connection means are auto maintained, so that in case of failure they try automatically to re-connect.

Advantageously, the connection means TCP/IP1 for the first transmitter/receiver means pair is distinct of the connection means TCP/IP2 for the second transmitter/receiver means pair. Distinct connection means enables to avoid single point of failure. These two connection means can be configurable, namely the IP (Internet Protocol) address and the related port(s) on which a connection is established. It is possible to provide both connection means on the same LAN (Local Access Network) but it is advantageous to configure each connection means on a separate LAN. Thus, in case of a LAN failure, only a single connection may be lost.

It is advantageous, that both service queues SQ1 and SQ2 have wrapping feature. In case of any queue being full of data, the en-queue operation will be performed and old data will be overwritten. In this way it is possible to prevent misalignment of data due to stopped or temporarily interrupted transmission periods. Indeed, in case of stopped transmission and without wrapping feature, the old data would stay in the queue and the new data would be lost. In particular, in a situation where only one of the two queues is stopped, after the transmission is repaired, one connection will have the old data flowing while the other connection will have the new data flowing, thus leading to a misalignment of data.

It is also advantageous that both service queues SQ1 and SQ2 are synchronized queues. Thus, it is guaranteed that the steps of pulling the message (step 3) of the first service queue SQ1 to the first transmitter means Tx1, and the message of the second service queue SQ2 to the second transmitter means Tx2, are performed in a synchronous way.

Advantageously, the step of transferring the message (step 2, 3, 5 or 6) from any queue is suspended when the corresponding queue is empty. Consequently, server CPU (Computer Processing Unit) waste of time is avoided.

## Claims

1. Method for real-time replication of a flow of data being exchanged between a producer (P) and a consumer (C), comprising the steps of :
- producing a message from the data flow coming from the producer,
- en-queuing the message (1) on a producer queue (PQ),
- replicating the message (2) on a first and on a second service queue (SQ1, SQ2),
- pulling the message (3) of the first service queue (SQ1) to a first transmitter means (Tx1), and the message of the second service queue (SQ2) to a second transmitter means (Tx2),
- transferring the message (4) of the first service queue (SQ1) via the first transmitter means (Tx1) to a first receiver means (TRx1) through a first connection means (TCP/IP1),
- transferring the message (4) of the second service queue (SQ2) via the second transmitter means (Tx2) to a second receiver means (TRx2) through a second connection means (TCP/IP2),
- en-queuing the message (5) of the first receiver means (TRx1) to a consumer queue (CQ) of the consumer (C),
wherein in case of a failure of the first transmitter (Tx1) or the first receiver (TRx1) or the first connection means (TCP/IP1), the message of the second receiver means (TRx2) is en-queued (6) to the consumer queue (CQ) of the consumer (C).

2. Method for real-time replication of a flow of data being exchanged between a producer (P) and a consumer (C) as recited in claim 1, wherein the step of en-queuing the message (3) of the second receiver means (TRx2) to the consumer queue (CQ) is controlled by a log means (LM).

3. Method for real-time replication of a flow of data being exchanged between a producer (P) and a consumer (C) as recited in claim 1 or 2, wherein the step of en-queuing the message (3) of the second receiver means (TRx2) to the consumer queue (CQ) is performed when the log means (LM) detects that the consumer queue (CQ) is empty.

4. Method for real-time replication of a flow of data being exchanged between a producer (P) and a consumer (C) as recited in claim 1, wherein the steps of pulling the message (3) of the first service queue (SQ1) to a first transmitter means (Tx1), and the message of the second service queue (SQ2) to a second transmitter means (Tx2), are performed in a synchronous way.

5. Method for real-time replication of a flow of data being exchanged between a producer (P) and a consumer (C) as recited in claim 1, wherein the connection means for the first transmitter/receiver means pair is distinct of the connection means for the second transmitter/receiver means pair.

6. Method for real-time replication of a flow of data being exchanged between a producer (P) and a consumer (C) as recited in claim 1, wherein the producer is a server application.

7. Method for real-time replication of a flow of data being exchanged between a producer (P) and a consumer (C) as recited in claim 1, wherein the consumer is a client application.

8. Method for real-time replication of a flow of data being exchanged between a producer (P) and a consumer (C) as recited in one of the claims 1 to 4, wherein all the steps are implemented by a daemon.

9. System for real-time replication of a flow of data being exchanged between a producer (P) and a consumer (C), comprising :
- a producer queue (PQ) in which a message is en-queued, said message being formed from the data flow coming from the producer (P),
- a first and a second service queue (SQ1, SQ2) in which the message is replicated,
- a first transmitter means (Tx1) for pulling the message of the first service queue (SQ1) and transferring it to a first receiver means (TRx1), the first transmitter (Tx1) and receiver means (TRx1) being connected together via a first connection means (TCP/IP1),
- a second transmitter means (Tx2) for pulling the message of the second service queue (SQ2) and transferring it to a second receiver means (TRx2), the second transmitter (Tx2) and receiver means (TRx2) being connected together via a second connection means (TCP/IP2),
- a consumer queue (CQ) of the consumer (C) in which the message of the first receiver means (TRx1) is en-queued,
wherein said system further comprises a log means (LM) which in case of a failure of the first transmitter (Tx1) or the first receiver (TRx1) or the first connection means (TCP/IP1) controls that the message of the second receiver means (TRx2) is en-queued to the consumer queue (CQ) of the consumer (C).

10. A computer program product comprising a computer readable medium, having thereon computer program code means, when said program is loaded, to make the computer execute procedure to replicate in real-time a flow of data being exchanged between a producer and a consumer as recited in claim 1.
